# EUROPEAN PATENT APPLICATION

(11) **EP 2 282 290 A1**
(43) Date of publication of application: **09.02.2011**
(21) Application number: 09180311.4
(22) Date of filing: 22.12.2009
(51) Int. Cl.: G06Q 30/00

(54) **System and method for delivery of retail-channel-specific content to a media device**

(30) Priority: 31.07.2009 CA 2674405; 21.12.2009 US 643769
(71) Applicant: BCE Inc., Verdun, QC H3E 3B3 (CA)
(72) Inventor: Wong, Alexander, Markham Ontario L3R 9C2 (CA); Teng, Daniel, Markham Ontario L3S 3E2 (CA); Mastroianni, Fiorenzo, Mississauga Ontario L5B 3J4 (CA); Bazerghi, Adel, Oakville Ontario L6H 6K6 (CA)
(74) Representative: Nilsson, Lars-Magnus

(57) **Abstract**

A system comprising: a memory; at least one network entity operatively coupled to the memory and configured for: receiving an identifier of a media device; receiving an identity of a retail channel used to acquire the media device; storing in the memory an association between the identity of the retail channel and the identifier of the media device; and causing content specific to the retail channel to be transmitted to the media device over a communications network in response to determining a presence of the media device on the communications network. Also, a media device, comprising: a network interface; a user interface; and a processing entity. The processing entity is configured for: identifying the media device to an external entity via the network interface; receiving retail-channel-specific content over the network interface; and conveying the retail-channel-specific content via the user interface through a retail-channel-specific application installed on the media device.

## Description

### FIELD OF THE INVENTION

The present invention relates generally to media devices such as mobile communication devices, set top boxes and the like. In particular, the present invention pertains to the delivery of retail-channel-specific content to such devices.

### BACKGROUND

Retailers are often interested in ways of maintaining access to their customers after purchases have been made, in order to send out promotional materials (e.g., regarding upcoming sales). Current methods include specifically asking for a customer's email address or contact information during the acquisition phase of the product. This is cumbersome and is only marginally effective. Thus, it is desirable to find new and innovative ways for a retailer to reach out to its existing customer base in order to advise of promotions and thereby increase the likelihood of future sales.

### SUMMARY OF THE INVENTION

It is recognized that certain retail channels offer telecommunications services, allowing consumers to acquire media devices from stores and websites. These media devices are then activated on a service provider network. If the service provider knows through which retail channel a particular media device was acquired, information specific to that retail channel can be sent to the consumer even after the consumer is no longer in the vicinity (physical or electronic) of the retail outlet from which the device was acquired. A retail channel desirous of obtaining access to this valuable post-acquisition resource available through a given service provider may provide monetary compensation or offer preferential treatment (e.g., preferred shelf space) to that service provider.

Therefore, according to a first broad aspect, the present invention seeks to provide a system comprising: a memory; at least one network entity operatively coupled to the memory and configured for: receiving an identifier of a media device; receiving an identity of a retail channel used to acquire the media device; storing in the memory an association between the identity of the retail channel and the identifier of the media device; and causing content specific to the retail channel to be transmitted to the media device over a communications network in response to determining a presence of the media device on the communications network.

In an embodiment, The the memory can comprise a first database and a second database, the association can be stored in the first database, and the at least one network entity can be further configured to (i) receive the identifier of the media device over the communications network, (ii) consult the first database based on the identifier of the media device to determine an identity of the retail channel, and (iii) consult the second database based on the identity of the retail channel to determine the content specific to the retail channel.

In an embodiment, the content specific to the retail channel can comprise computer-readable instructions for installing a retail-channel-specific application specific to the retail channel on the media device.

In an embodiment, the content specific to the retail channel can comprise an identity of a retail-channel-specific application specific to the retail channel.

In an embodiment, the content specific to the retail channel can comprise promotional information regarding the retail channel.

In an embodiment, the content specific to the retail channel can comprise at least one of a textual message, a URL, a bitmap, a still image, an audio segment and a video segment.

In an embodiment, the content specific to the retail channel can be modifiable by an authorized representative of the retail channel, in which case the system can comprise a content management entity configured to interact with the authorized representative of the retail channel to allow the authorized representative of the retail channel to modify the content specific to the retail channel. Also, the content management entity can be configured to interact with the authorized representative of the retail channel over the Internet.

According to a second broad aspect, the present invention seeks to provide a method for execution by at least one network entity, comprising: receiving an identifier of a media device; receiving an identity of a retail channel used to acquire the media device; storing in the memory an association between the identity of the retail channel and the identifier of the media device; and causing content specific to the retail channel to be transmitted to the media device over a communications network in response to determining a presence of the media device on the communications network.

According to a third broad aspect, the present invention seeks to provide a computer-readable storage medium storing instructions which, when executed by at least one computing device, cause the at least one computing device to: be attentive to receipt of an identifier of a media device; be attentive to receipt of an identity of a retail channel used to acquire the media device; responsive to receipt of the identifier of the media device and the identity of the retail channel, store in the memory an association between the identity of the retail channel and the identifier of the media device; response to determining a presence of the media device on a communications network, cause content specific to the retail channel to be transmitted to the media device over the communications network.

According to a fourth broad aspect, the present invention seeks to provide a system comprising: a memory; a network entity operatively coupled to the memory and configured for: receiving an identifier of a media device; accessing the memory based on the identifier in order to retrieve content specific to a retail channel used to acquire the media device; and releasing the content specific to the retail channel towards the media device.

In an embodiment, the entity associated with the retail channel can comprise a retail outlet and the message can be received after having traversed the Internet at least partly between the retail outlet and the second network entity.

In an embodiment, the memory can comprise a first database and a second database, and the first network entity can be further configured to (i) access the first database based on the identifier of the media device in order to retrieve the identifier of the retail channel and (ii) access the second database based on the identifier of the retail channel in order to retrieve the content specific to the retail channel.

In an embodiment, the memory can comprise a first database and a second database, and the first network entity can be further configured to (i) receive an indication of a geographic region in which the media device is located, (ii) consult the first database based on the identifier of the media device in order to retrieve the identifier of the retail channel, and (iii) access the second database based on the identifier of the retail channel and the geographic region in order to retrieve said content.

In an embodiment, the memory can comprise a database and the second network entity can be further configured to store the identifier of the retail channel in the database in association with the identifier of the media device. In such an embodiment, the retail-channel-specific application can comprise at least one of a ticker application and a browser. Alternatively, the network entity can be further configured for activating the retail-channel-specific application on the media device, in which case, to activate the retail-channel-specific application, the network entity can be configured for sending a message identifying the retail-channel-specific application; or, alternatively, to activate the retail-channel-specific application, the network entity can be configured for causing installation of the retail-channel-specific application on the media device.

In an embodiment, the content specific to the retail channel can be modifiable by an authorized representative of the retail channel, in which case a content management entity can be configured to interact with the authorized representative of the retail channel to allow the authorized representative of the retail channel to modify the content specific to the retail channel. Also, the content management entity can be configured to interact with the authorized representative of the retail channel over the Internet.

In an embodiment, the content specific to the retail channel can comprise promotional information regarding the retail channel.

In an embodiment, the content specific to the retail channel can comprise at least one of a textual message, a URL, a bitmap, a still image, an audio segment and a video segment.

In an embodiment, the content specific to the retail channel can be released over an umbilical data connection with the media device.

In an embodiment, the media device can comprise a mobile communication device.

In an embodiment, the media device can comprise a television set top box.

In an embodiment, the media device can comprise a digital radio unit.

According to a fifth broad aspect, the present invention seeks to provide a method comprising: receiving an identifier of a media device; accessing a memory based on the identifier in order to retrieve content specific to a retail channel used to acquire the media device; and releasing the content specific to the retail channel towards the media device.

According to a sixth broad aspect, the present invention seeks to provide a computer-readable storage medium storing instructions which, when executed by at least one computing device, cause the at least one computing device to: be attentive to receipt of an identifier of a media device; responsive to receipt of the identifier of the media device, access a memory based on the identifier in order to retrieve content specific to a retail channel used to acquire the media device; and release the content specific to the retail channel towards the media device.

According to a seventh broad aspect, the present invention seeks to provide a media device, comprising: a network communication interface; a user interface; and a processing entity. The processing entity is configured for: identifying the media device to an external entity via the network communication interface; receiving retail-channel-specific content over the network communication interface; and conveying the retail-channel-specific content via the user interface through a retail-channel-specific application installed on the media device.

According to an eighth broad aspect, the present invention seeks to provide a method carried out by a media device acquired via a retail channel, comprising: establishing a presence on a communications network; receiving content specific to the retail channel over the communications network; and conveying the content specific to the retail channel to a user of the media device through a retail-channel-specific application specific to the retail channel and installed on the media device.

In an embodiment, installing the retail-channel-specific application on the media device can be carried out using a widget manager.

In an embodiment, receiving the content specific to the retail channel can be carried out over an umbilical data connection with a network entity in the communications network.

According to a ninth broad aspect, the present invention seeks to provide a process executed by a retail channel that offers for acquisition first media devices activatable by a particular service provider and second media devices activatable by at least one other service provider, the process comprising: making an offer to the particular service provider, the offer comprising a commitment to preferentially display to prospective consumers the first media devices over the second media devices; and receiving, in exchange for acceptance of said offer by the particular service provider, a commitment by the particular service provider to send content specific to the retail channel to the first media devices after acquisition thereof.

These and other aspects and features of the present invention will now become apparent to those of ordinary skill in the art upon review of the following description of specific embodiments of the invention in conjunction with the accompanying drawings.

### BRIEF DESCRIPTION OF THE DRAWINGS

In the accompanying drawings:
Fig. 1 is a block diagram of an architecture for allowing a service provider to customize content being delivered to a media device that is a mobile communication device, in accordance with a specific non-limiting embodiment of the present invention;
Fig. 2 is a signal flow diagram showing activation of a media device in the example non-limiting architecture of Fig. 1;
Fig. 3 is a signal flow diagram showing content customization in the example non-limiting architecture of Fig. 1;
Fig. 4 is a signal flow diagram illustrating delivery of retail-channels-specific content in the example non-limiting architecture of Fig. 1;
Fig. 5A illustrates a media device with a ticker application for conveying retail-channel-specific content to a user of the media device;
Figs. 5B and 5C illustrate a media device with a browser application for conveying retail-channel-specific content to a user of the media device, in accordance with a specific non-limiting embodiment of the present invention;
Figs. 6A and 6B illustrate activation of a pre-installed retail-channel-specific application on a media device, in accordance with a specific non-limiting embodiment of the present invention;
Fig. 6C illustrates installation of a retail-channel-specific application on a media device using a widget manager, in accordance with a specific non-limiting embodiment of the present invention;
Fig. 7 illustrates an architecture similar to that of Fig. 1 but specifically adapted to the scenario where the media device is a set top box, in accordance with a specific non-limiting embodiment of the present invention.

It is to be expressly understood that the description and drawings are only for the purpose of illustration of certain embodiments of the invention and are an aid for understanding. They are not intended to be a definition of the limits of the invention.

### DETAILED DESCRIPTION

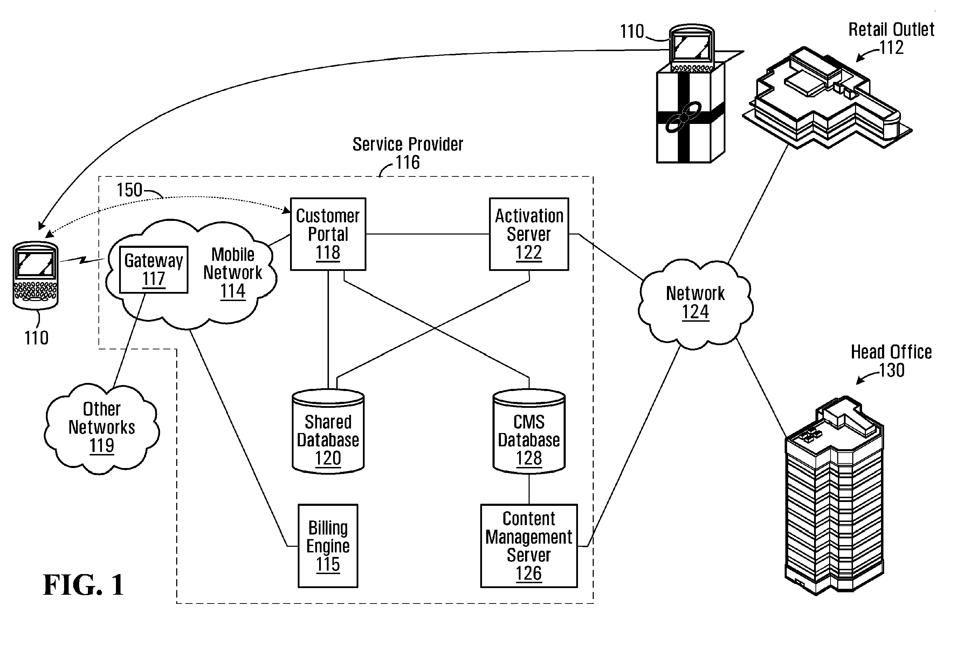

Reference is made to Fig. 1, which shows an environment in which a service provider is capable of customizing content being delivered to media devices as a function of the retail channel used to acquire those devices. Specifically, a media device 110 is acquired by a consumer (not shown) from a retail outlet 112. It is immaterial to the present invention whether the media device 110 is acquired while the consumer is physically visiting the retail outlet 112 or while the consumer is remote from the retail outlet 112 (e.g., in the case of an Internet or telephone acquisition following which the media device 110 is shipped to the consumer). Also, it should be understood that an "acquisition" within the scope of the present invention can include a purchase, loan, lease or other property transfer arrangement.

The retail outlet 112 includes a communications facility (such as a computer equipped with a modem or with high-speed Internet access and a browser) for communicating over a network 124, which can include the Internet for example. In non-limiting embodiments, the retail outlet 112 may be a single store or it may be one of several (possibly hundreds or thousands) under the banner of a particular retail channel. A retail channel can be a corporate entity (e.g., Best Buy, Future Shop, Sears, Bell World, etc.) that is expected to purvey media devices such as the media device 110, and which may include the corporate entity associated with the service provider or a third party corporate entity. The particular retail channel used in the illustrated embodiment is associated with a head office 130 where decisions are made regarding, among other things, management of content to be delivered to media devices acquired from associated retail outlets such as the retail outlet 112. The head office 130 includes a communications facility (such as a computer equipped with a modem or with high-speed Internet access and a browser) for communicating over a network, which has been shown as the network 124 but in reality could be a different network than the one to which the retail outlet 112 is connected. In another alternative, a private network may interconnect the head office 130 and its associated retail outlets (including the retail outlet 112), with any external communication over the network 124 being channeled through the head office 130 or a designated one of its associated retail outlets.

In the specific non-limiting embodiment where the media device 110 is a mobile communication device (such as a telephone, a personal digital assistant such as Blackberry^{™}, a laptop, etc.), one reason for acquiring the media device 110 could be to use it within a mobile network 114. Accordingly, the media device 110 comprises a network communication interface for communicating over the mobile network 114, a user interface (e.g., a display, one or more keys/buttons, a microphone, a loudspeaker, a thumb roller, etc.) and a processing entity (possibly including one or more processors) operatively coupled to the network communication interface and the user interface.

The mobile network 114 is operated by a service provider 116 that implements an interconnection of base stations and switching centers to allow the media device 110 to establish telephone calls with other media devices in the mobile network 114. The service provider 116 also implements one or more gateways 117 that connect the mobile network 114 to other mobile and non-mobile networks 119, thus allowing the media device 110 to send and receive text messages, carry out data transfers and establish other types of media links with entities in such other networks.

The base stations, switching centers and gateways 117 monitor the behavior and statistics of individual media links (origin, destination, duration, number of bytes transferred, etc.) and report this information to a billing engine 115.

The service provider 116 also implements a customer portal 118, which is a network entity configured to interact with the processing entity of the media device 110 during critical periods such as activation, troubleshooting or resetting. More specifically, an umbilical data connection 150 is maintained between the media device 110 and the customer portal 118 to allow control over operation of the media device 110. A protocol can be used to communicate over the umbilical data connection. In order to execute its functions properly, the customer portal 118 may occasionally need to read the contents of a shared database 120 and a content management database 128, as described in greater detail herein below.

In addition, the service provider 116 implements various other network entities that can be useful within the context of certain non-limiting embodiments of the present invention. These include an activation server 122, which is reachable over the network 124 and thus is reachable by the retail outlet 112. For example, depending on the implementation, the activation server 122 can be reachable from the retail outlet 112 at a specific phone number (dialed directly by a dialup modem at the retail outlet 112), or it can be reachable at a service-provider-specific URL, such as www.service-provider.com/activation-server (entered into a web browser at the retail outlet 112). When the media device 110 has been acquired from the retail outlet 112, the activation server 122 is contacted to inform the service provider 116 of this acquisition and of the likelihood that the media device 110 will soon require use of the mobile network 114. The activation server 122 may occasionally need to write to the aforementioned shared database 120, whose contents are, as mentioned above, occasionally read by the customer portal 118.

Another entity implemented by the service provider 116 is a content management server 126. The content management server 126 is configured to receive decisions about content customization for one or more retail channels. Accordingly, in the case of the particular retail channel under consideration here, the content management server 126 is connected to the network 124, to which is also connected the head office 130 for the particular retail channel. The content management server 126 includes or has access to the aforementioned content management database 128, which stores various information that may be of potential use in certain non-limiting embodiments of the present invention. Since this information is controlled by the head office 130, the information stored in the content management database 128 may include information specific to the particular retail channel, which is to be delivered to media devices that have been acquired from its associated retail outlets, such as the media device 110 acquired from the retail outlet 112. The content management server 126 may thus occasionally need to write to the content management database 128, whose contents are, as mentioned above, occasionally read by the customer portal 118.

Retail-channel-specific content customization carried out by the various components in the environment of Fig. 1 will now be described with reference to three (3) main phases of operation, namely activation, content management and content delivery. These phases of operation do not necessarily occur in the order listed and moreover can overlap temporally.

### Device Activation

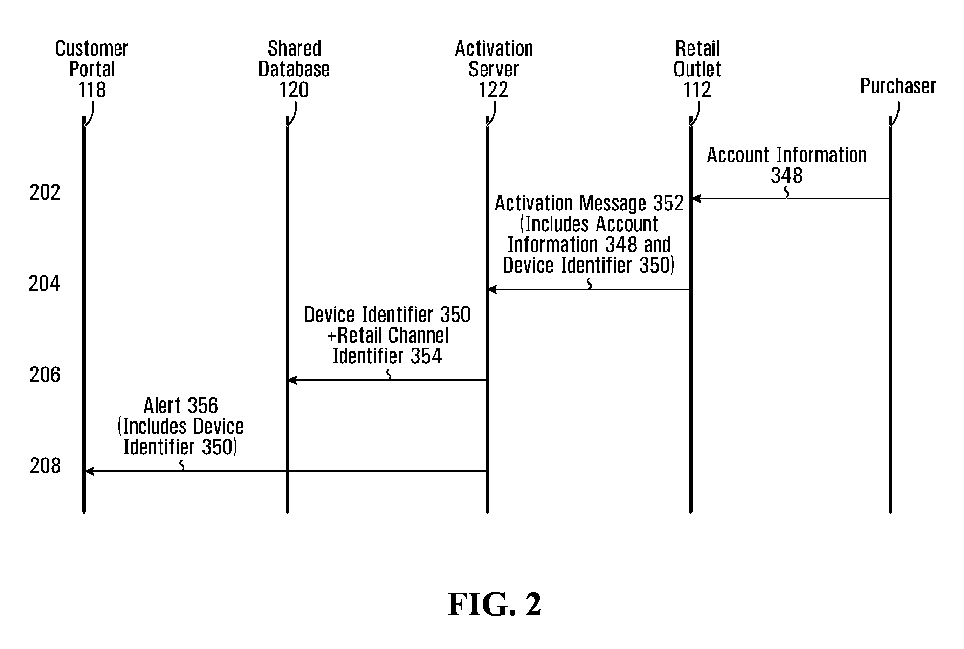

The service provider 116 controls access to the mobile network 114 by restricting access to those media devices that are registered to "subscribers" of the service provider 116. Thus, in order to gain access to the mobile network 114, the media device 110 has to be recognized by the service provider 116 as having been legitimately registered to a subscriber. To establish a relationship between the media device 110 and a given "subscriber" (which can simply be viewed as account information traceable to an entity responsible for payment), an identity of the media device 110 and the account information is relayed to the service provider 116. This occurs during the device activation phase, now described with reference to Fig. 2.

Specifically, at step 202 of Fig. 2, after the media device 110 has been acquired by the consumer, the retail outlet 112 collects account information 348 from the consumer. At step 204, the retail outlet 112 sends the account information 348 together with an identifier of the media device 110 (hereinafter referred to as a device identifier 350) to the activation server 122 in the form of an activation message 352, which may in actuality be composed of one or more messages. The device identifier 350 may comprise a telephone number, a serial number or any other suitable data element or combination of data elements permanently or semi-permanently associated with the media device 110. Transmission of the activation message 352 (which contains the account information 348 and the device identifier 350) is carried out over the network 124.

The activation server 122 thus obtains the device identifier 350 (which uniquely identifies the media device 110) and the associated account information 348 (which identifies the entity responsible for payment of invoices related to services incurred by the media device 110). The account information 348 is stored in association with the device identifier 350 (e.g., by the billing engine 115) so that the service provider 116 can monitor account activities and collect payment when required.

In addition to receiving the activation message 352, the activation server 122 learns an identity of the retail channel with which the retail outlet 112 is associated, herein referred to as the "particular retail channel". The particular retail channel can be represented by a retail channel identifier 354. The retail channel identifier 354 may be a name or a standardized code used to refer to the particular retail channel. Thus, it is expected that the meaning of the retail channel identifier 354 will be known to the retail outlet 122, to the head office 130 and to the activation server 122.

In one embodiment, the retail channel identifier 354 can be explicitly included in the activation message 352 sent to the activation server 122. Alternatively, the activation server 122 can learn of a source address (e.g., an IP address) from which the activation message 352 originated, and can then query another network server or database (not shown) to obtain the retail channel identifier 354 associated with the source address.

At step 206, the activation server 122 causes the device identifier 350 and the retail channel identifier 354 to be stored in the shared database 120. It should thus be understood that after having executed step 204 in the context of activating multiple media devices, the shared database 120 will end up storing a number of device identifiers along with their associated retail channel identifiers, as illustrated in the following non-limiting example:

| device identifier 350 | retail channel identifier 354 |
|---|---|
| 514-932-1000 (phone number) | "Retail channel #1" |
| D0 1C CC 8A B9 DE (MAC address) | "Retail channel #2" |
| J714XH5NA2287 (serial number) | "Retail channel #3" |

At step 208, the activation server 122 may send an alert 356 to the customer portal 118. The alert 356 can include the device identifier 350. The alert 356 serves to indicate to the customer portal 118 that the media device 110 (which is uniquely identified by the device identifier 350) is expected to soon require services in the mobile network 114.

### Content Management

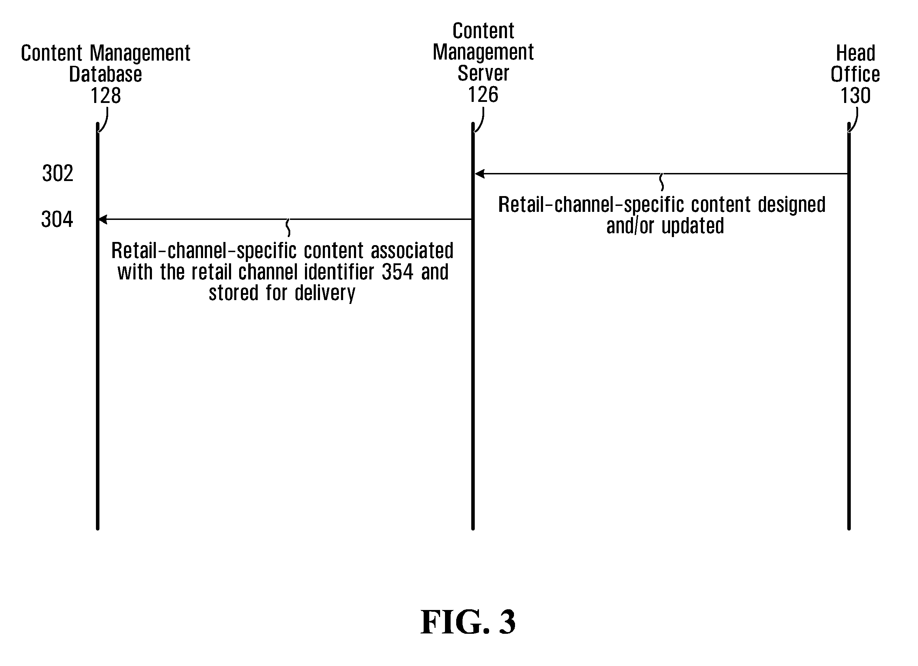

During the content management phase, the head office 130 manages retail-channel-specific content to be delivered to media devices acquired through the particular retail channel, such as the media device 110 in this particular example. Accordingly, with reference to Fig. 3, at step 302, an authorized representative of the retail channel communicates from the head office 130 with the content management server 126 over the network 124. During the course of this communication, the authorized representative designs and/or updates the retail-channel-specific content that is to be delivered to media devices (such as the media device 110) acquired from the retail outlet 112 and other retail outlets associated with the same retail channel. The update process may be partly or fully automated.

In various non-limiting embodiments, the retail-channel-specific content may comprise one or more of a textual message, a URL, a bitmap, a still image, an audio segment and a video segment, to name a few non-limiting possibilities. In a specific non-limiting example, the retail-channel-specific content may be promotional in nature. The content management server 126 can provide various editing and formatting tools to allow the authorized representative to manage the retail-channel-specific content.

At step 304, the retail-channel-specific content is stored in the content management database 128 in association with an identifier of the particular retail channel, in this case the retail channel identifier 354, which is known to the head office 130. It should thus be understood that where different head offices manage the content for respective retail channels, the content management database 128 will end up storing a plurality of retail channel identifiers along with associated retail-channel-specific content, as illustrated in the following non-limiting example:

| retail channel identifier 354 | retail-channel-specific content |
|---|---|
| "Retail channel #1" | textual message ABC.txt |
| "Retail channel #2" | PDF file ABC.pdf containing promotional flyer |
| "Retail channel #3" | 10-second audiovisual commercial ABC.mpg |

### Content Delivery

The retail-channel-specific content for the particular retail channel can be delivered to the media device 110 in a variety of ways, several of which will now be described. To begin with, it is assumed that the media device 110 is turned on after having been acquired and is eventually located by the mobile network 114, and its presence is signaled to the customer portal 118. In order to deliver the appropriate retail-channel-specific content to the media device 110, the customer portal 118 needs to first determine which retail channel was used to acquire the media device 110. Receipt of the alert 356 (described earlier in connection with step 208) may additionally prepare the customer portal 118 for this task.

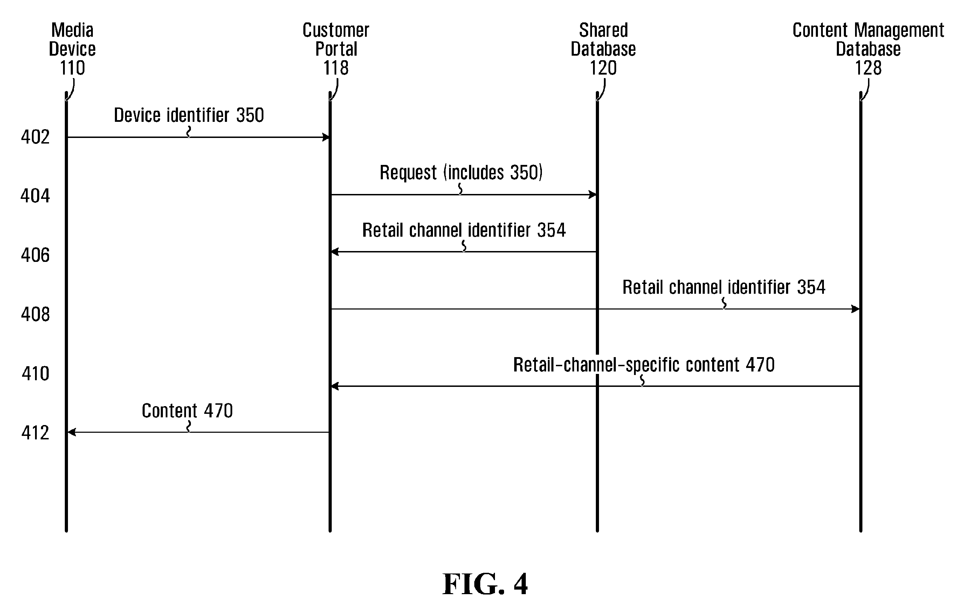

Referring therefore to Fig. 4, at step 402, the media device 110 identifies itself by way of the aforementioned device identifier 350. The device identifier 350 may be provided to the customer portal 118 over the mobile network 114 when the media device 110 first attempts communication over the mobile network 114 or during subsequent attempts. At step 404, after having received the device identifier 350, the customer portal 118 accesses the shared database 120 based on the device identifier 350 in order to retrieve, at step 406, the retail channel identifier 354, i.e., the identifier of the retail channel associated with the retail outlet 112 from which the media device 110 was acquired.

At step 408, the customer portal 118 accesses the content management database 128 based on the retail channel identifier 354. Recalling that the content management database 128 stores retail-channel-specific content in association with various retail channel identifiers, it should be apparent that by providing the retail channel identifier 354 to the content management database 128, the customer portal 118 will retrieve, at step 410, the retail-channel-specific content for the particular retail channel, herein simply denoted as "content" 470. To be clear, therefore, the content 470 refers to the retail-channel-specific content for the particular retail channel. It is recalled that the content 470 may comprise one or more of a textual message, a URL, a bitmap, a still image, an audio segment and a video segment, to name a few non-limiting possibilities and may, but need not, be promotional in nature.

The content 470 is now delivered to the media device 110 at step 412. Delivery of the content 470 to the media device 110 can take place with the assistance of a retail-channel-specific application residing on the media device 110, such as a block of code that can be executed either with or without requiring compilation, an example of the latter being a "widget". The retail-channel-specific application is used to process the content 470 sent to the media device 110. In a first scenario, the retail-channel-specific application can be generic across multiple retail channels and in a second scenario, the retail-channel-specific application can be customized for the particular retail channel.

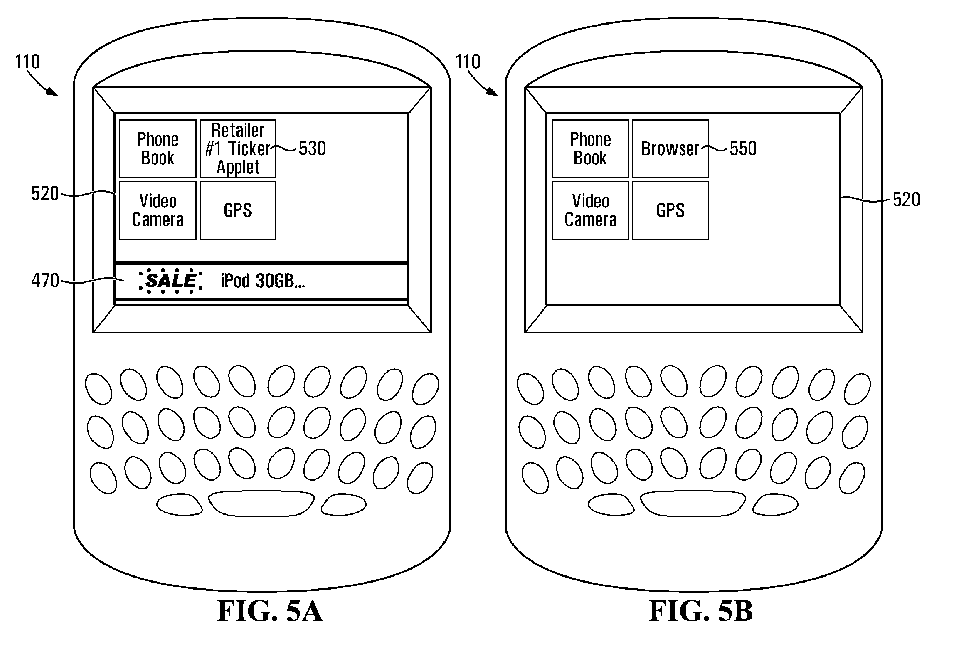

Consider now the first scenario, wherein the retail-channel-specific application used to convey the content 470 to the user is generic. With reference to Fig. 5A, an example of a generic retail-channel-specific application residing on the media device 110 is a "ticker" applet, which is capable of displaying a message on a screen 520 of the media device 110, such message conveying data obtained from elsewhere. In particular, this "data" can be the content 470 received from the customer portal 118, assuming that it is suitably formatted for the media device 110. The content 470 can be delivered to the media device 110 over the aforementioned umbilical data connection 150 maintained between the customer portal 118 and the media device 110. The ticker applet, which can be invoked by clicking (or otherwise accessing) on an icon 530 made available on the screen 520, subsequently causes a running message conveying the received content 470 to be displayed on the screen 520.

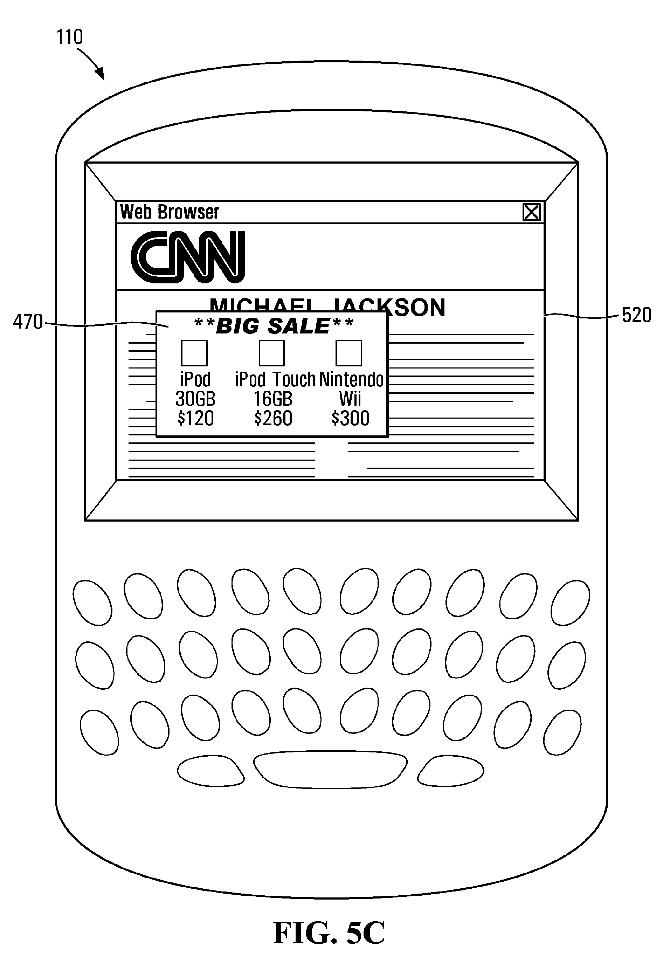

With reference to Fig. 5B, another example of a generic retail-channel-specific application residing on the media device 110 is a browser (e.g., an Internet browser), which is capable of accessing HTML code from a remote server, and interpreting it for display on the screen 520 of the media device 110. The browser can be invoked by clicking (or otherwise accessing) on an icon 550 made available on the screen 520. Fig. 5C shows the effect of having invoked the browser. In particular, when opened, the browser retrieves HTML content from a default "home page". In accordance with a non-limiting embodiment of the present invention, the HTML code of the home page can be altered by the service provider 116. More specifically, the customer portal 118 detects that the browser is attempting to access the home page, and adds the content 470 (e.g., a URL including a definition of a graphical element such as a border) to the HTML code of the home page. The totality of the content, including the original home page content to which the content 470 has been added, is sent to the browser via the aforementioned umbilical data connection 150. This intervention of by the service provider 116 has the effect of influencing what is first seen by the user of the media device 110 after invoking the browser. A similar technique can be used for altering other web pages, either instead of or in addition to the home page.

Consider now the second scenario, wherein the retail-channel-specific application used to convey the content 470 to the user is customized for the particular retail channel. This scenario includes at least the following two possibilities.

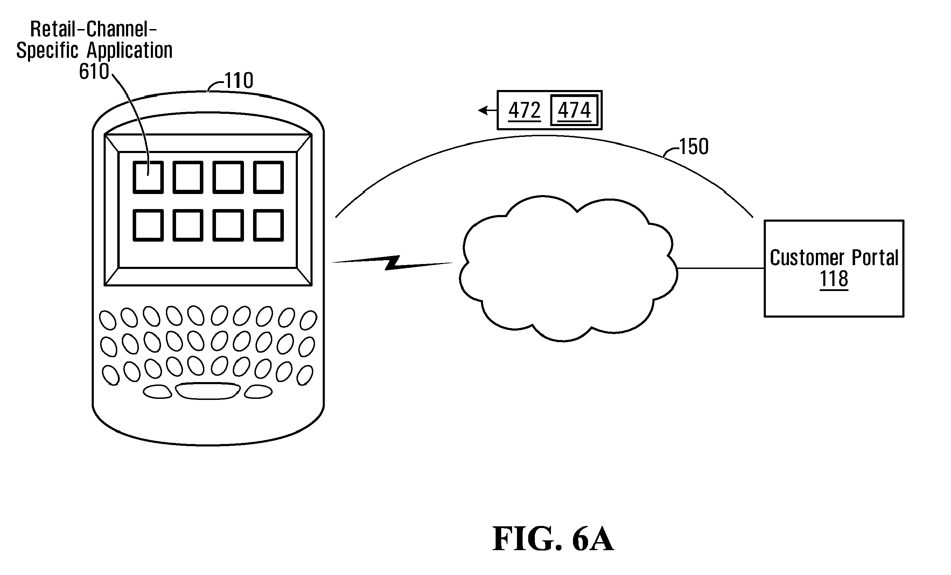

A first possibility is for different retail-channel-specific applications to be customized for different retail channels and pre-installed on the media device 110 by the service provider 116 in anticipation that one of these retail channels might be the one used to acquire the media device 110. All that is then needed is for the appropriate retail-channel-specific application to be activated by the service provider 116 when the media device 110 accesses the mobile network 114. To this end, before delivering the content 470 to the media device 110, the customer portal 118 activates the appropriate retail-channel-specific application. With reference to Fig. 6A, this can be achieved by the customer portal 118 sending a message 472 that includes an identifier 474 identifying the particular retail channel. The meaning of the identifier 474 is assumed to be understood by the media device 110. The identifier 474 can be delivered to the media device 110 via the umbilical data connection 150. The media device 110 recognizes the identifier 474 and activates the appropriate retail-channel-specific application. The activated retail-channel-specific application can be represented by an icon 610 on the screen 520 of the media device 110.

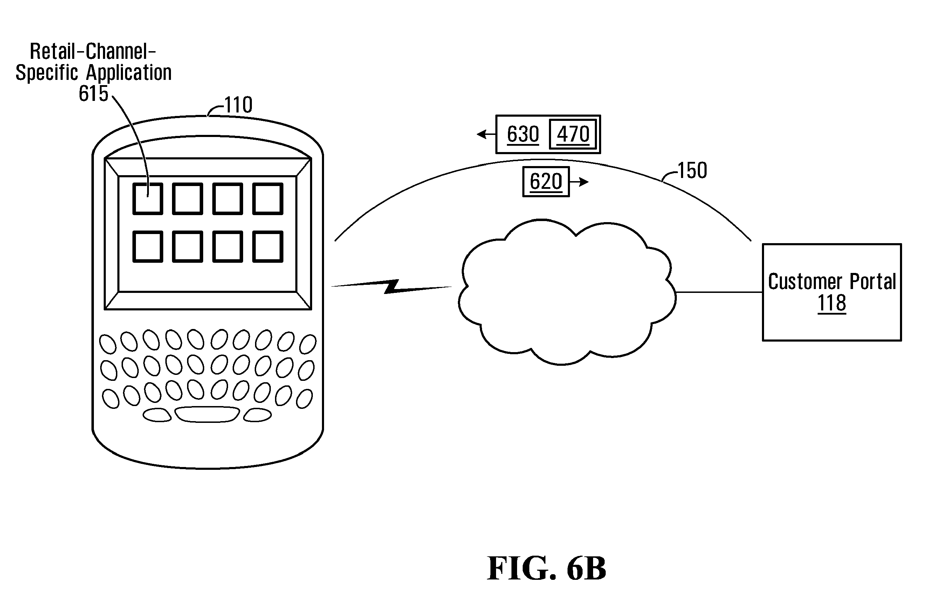

Following this, and with reference to Fig. 6B, the retail-channel-specific application can be invoked by the user as desired. When the retail-channel-specific application is invoked (e.g., by selecting the icon 610 representing the retail-channel-specific application), a window 615 may be presented to the user. The media device 110 communicates with the customer portal 118 over the umbilical data connection 150 and issues a request 620 for retail-channel-specific content. The customer portal 118 responds with a message 630 including the content 470 that was retrieved from the content management database 128. Upon receipt at the media device 110, the content 470 can be conveyed in a suitable manner (e.g., rendered, played back, etc.) by the retail-channel-specific application.

In a variant, to enhance user convenience, the customer portal 118 may inform the retail-channel-specific application (and thereby the user) whenever there an update has occurred to the retail-channel-specific content. This may be achieved by way of a message that is translated by the retail-channel-specific application into a visual or audio cue (such as a star next to the icon 610) in order to alert the user that new or updated retail-channel-specific content is available. When the retail-channel-specific application is invoked, the media device 110 issues the aforementioned request 620 and receives, in return, the new or updated retail-channel-specific content for conveyance to the user.

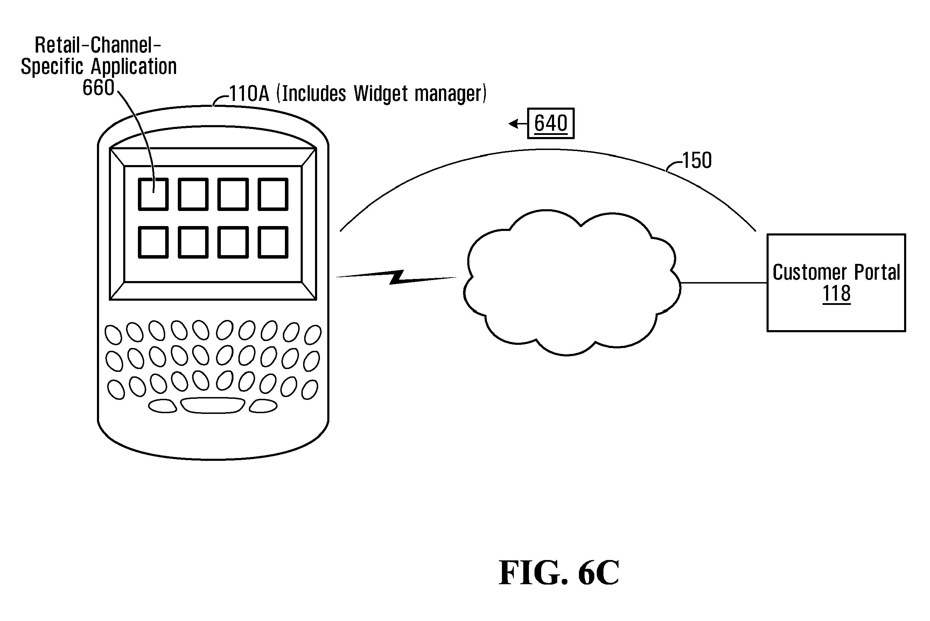

As an alternative to pre-installation, a second possibility is for the retail-channel-specific application to be installed by the service provider 116 when the media device 110 accesses the mobile network 114 (e.g., when it first accesses the mobile network 114). This possibility is now discussed with reference to Fig. 6C. Specifically, an application manager (e.g., a widget manager) resides on a widget-manager-enabled media device 110A. Now, having learned of the presence of the widget-manager-enabled media device 110A in the mobile network 114, the customer portal 118 sends a command 640 to the widget manager. Transmission of the command 640 occurs over the umbilical data connection 150. It is noted that transmission of the command 640 may be triggered by receipt of the alert 356 from the activation server 122 (as described earlier in connection with step 208). The command instructs the widget manager to add a widget. This can be followed by a handshaking sequence between the widget manager and the customer portal 118, whereby the necessary computer-readable instructions for the retail-channel-specific application is downloaded to the widget-manager-enabled media device 110A. For example, but without limitation, an XML-based protocol can be used, such as the Widgets 1.0 protocol
(http://www.w3.org/TR/widgets-updates/) established by the World Wide Web Consortium, and subsequent versions thereof. The downloaded retail-channel-specific application is then installed on the widget-manager-enabled media device 110A. Once installation of the retail-channel-specific application is complete, the widget-manager-enabled media device 110A may display an icon 660 on the screen 520, representing the retail-channel-specific application. From this point onwards, the retail-channel-specific application can obtain and convey the content 470 in a manner identical to what was previously described in the case where the retail-channel-specific application was pre-installed.

Those skilled in the art will appreciate that the above embodiments may be economically beneficial to a retail channel. Consider for example that the retail channel might sell (or lease, etc.) media devices activatable by a range of service providers, including first media devices activatable by a first service provider and second media devices activatable by one or more second service providers. The retail channel can make an offer to a the first service provider, such offer including a commitment to preferentially display to prospective consumers the first media devices over the second media devices. Without limitation, preferential display can mean physical (shelf space) and/or virtual (screen space). In exchange for acceptance of this offer by the first service provider, the retail channel can demand that the first service provider commit to sending to the first media devices (after their acquisition from the retail channel) content that is specific to the retail channel. This therefore allows the retail channel to retain access to its customers in a post-acquisition scenario.

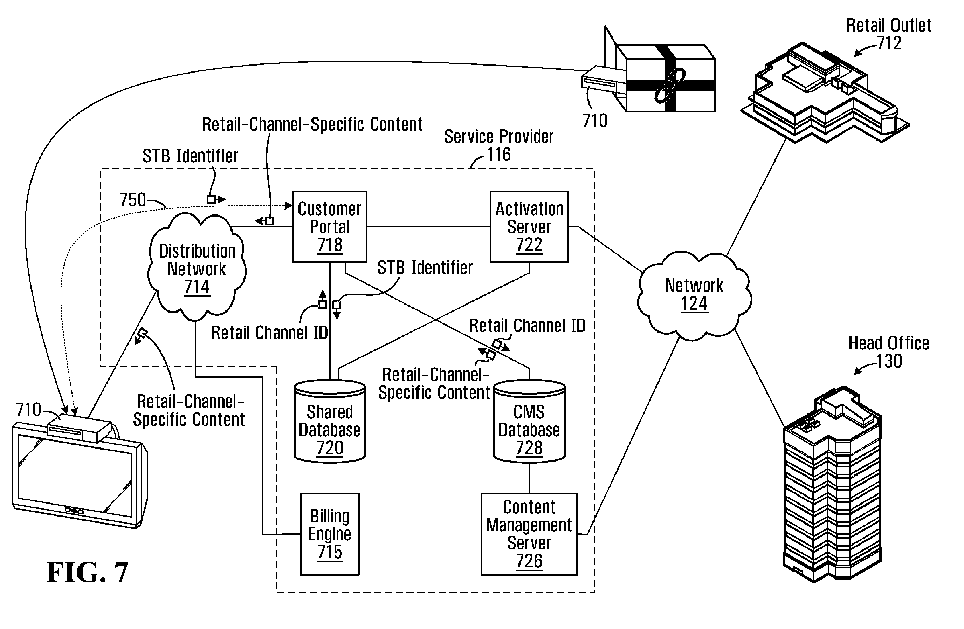

Those skilled in the art should appreciate that although the above description has focused on the case where the media device 110 has the functionality of a mobile communication device, the present invention is also applicable to other types of media devices, in particular digital radio units, continuously or intermittently Internet-enabled MP3 players (e.g., iPod^{™}), digital media reading platforms (e.g., Kindle^{™}), and television set top boxes (STBs). In the case where the media device 110 is a television STB, and with reference to Fig. 7, a STB 710 receives television programming over a television distribution network 714, such as a cable network, satellite network or the Internet. When the STB 710 (having a unique serial number, MAC address or other identifier) is acquired from a retail outlet 712 (either physically or over the Internet), the leads to an activation phase which includes identification of a subscriber and a retail channel associated with the retail outlet 712. The association between the STB 710 and the retail channel is stored in a shared database 720. The STB 710 is then brought to a residence and is set up to communicate with a customer portal 718 over the distribution network 714. The customer portal 718 recognizes the STB 710 by virtue of its identifier, then determines the retail channel associated with the STB 710 by consulting the shared database 720. The customer portal 718 then determines the appropriate retail-channel-specific content from a content management database 728, which can be the same as the content management database 128 described previously. The retail-channel-specific content is then delivered to the STB 710 over the distribution network 714.

Those skilled in the art should also appreciate that the retail-channel-specific content may be further customized on the basis of a geographic region or other parameter associated with the media device 110 (or 110A or 710). Thus, a given retail channel may render available different content for different geographic regions. As a result, the retail channel identifiers stored in the content management database 128 (or 728) can have regional variations in their associated content, as illustrated in the following non-limiting example:

| retail channel identifier 354 | geographic region | retail-channel-specific content |
|---|---|---|
| "Retail channel #1" | United States and Canada (except Quebec) | textual message ABC_e.txt (in English) |
| | Canada (Quebec) | textual message ABC_f.txt (in French) |
| | United States (California, Florida, New York) | textual message ABD_s.txt (in Spanish) |
| "Retail channel #2" | Quebec | PDF file ABC_q.pdf containing promotional flyer (with prices including Quebec tax) |
| | Ontario | PDF file ABC_o.pdf containing promotional flyer (with prices including Ontario tax) |
| "Retail channel #3" | United States, Canada | 10-second audiovisual commercial ABC_e.mpg (in English) |
| | United States, Mexico | 10-second audiovisual commercial DEF_s.mpg (in Spanish) |

In this alternative, the geographic region in which the media device 110 (or 110A or 710) is located can be learned by the customer portal 118 (or 718) at around the same time as the device identifier 350 is received, either based on a registered address for the subscriber (which can be obtained by consulting the billing engine 115 or a billing engine 715, in the case of Fig. 7) or through the use of positioning techniques (e.g., triangulation, nearest base station, processing received GPS coordinates, etc.). Once the retail channel identifier 354 is obtained from the shared database 120 (or 720), it is provided along with the geographic region to the content management database 128 (or 728), from which the appropriate retail-channel-specific content is retrieved.

Those skilled in the art should also appreciate that the retail-channel-specific content stored in the content management database 128 (or 728) may be further customized on the basis of a geographic sub-region associated with the particular retail outlet from which the media device 110 (or 110A or 710) was acquired. For example, the geographic sub-region in which the retail outlet 112 is located can be learned by activation server 122 during the device activation phase. In one embodiment, the geographic sub-region can be explicitly included in the activation message 352 sent to the activation server 122. Alternatively, the activation server 122 can learn of a source address (e.g., an IP address) from which the activation message 352 originated, and can then query another network server or database (not shown) to obtain the geographic region of the retail outlet.

Thereafter, the activation server 122 causes the device identifier 350 and the retail channel identifier 354 and the geographic sub-region to be stored in the shared database 120.

Then, when the device identifier 350 is received from the media device 110 (or 110A or 710), the customer portal 118 accesses the shared database 120 based on the device identifier 350 in order to retrieve, at step 406, the retail channel identifier 354 and the geographic sub-region, which is then used to access the appropriate managed content from the content management database 128 (or 728).

Those skilled in the art should also appreciate that another example of a parameter associated with the media device 110 (or 110A or 710) for purposes of customization can include a device "type". A device type can refer to one or more particular specification(s) or feature(s) that allow a set of otherwise unrelated media devices to be organized into subsets that share a certain specification or feature set. For example, media devices could be classified according to their make (e.g., BlackBerry, Siemens, Echostar, etc.), model (e.g., 8310, 320Q, etc.) , operating system family (e.g., Windows, Symbian, etc.) and software version/revision (e.g., 1.0, 2.0, 2.1, etc.), among other possibilities. Thus, a given retail channel may render available different content for different device types. As a result, the retail channel identifiers stored in the content management database 128 can have device-type-driven variations in their associated content, as illustrated in the following non-limiting example:

| retail channel identifier 354 | device type | retail-channel-specific content |
|---|---|---|
| "Retail channel #1" | Device type I | textual message ABC.txt |
| | Device type II | PDF file ABC.pdf |
| | Device type III | 10-second audiovisual commercial ABC.mpg |
| "Retail channel #2" | Device type I | textual message DEF.txt |
| | Device type II | PDF file DEF.txt |
| | Device type III | 10-second audiovisual commercial ABC.mpg |
| "Retail channel #3" | Device type I | textual message GHI.txt |
| | Device type II | PDF file GHI.txt |
| | Device type III | 10-second audiovisual commercial GHI.mpg |

In this alternative, the device type associated with the media device 110 (or 110A or 710) can be assessed by the customer portal 118 at around same time as the device identifier 350 is received. For example, the device type may be implicit in the device identifier 350. Once the retail channel identifier 354 is obtained from the shared database 120 (or 720), it is provided along with the device type to the content management database 128 (or 728), from which the appropriate retail-channel-specific content is retrieved.

Those skilled in the art should also appreciate that the various entities denoted by reference numerals 115 (715), 118 (718), 122 (722) and 126 (726) have been illustrated as separate components merely for convenience and ease of understanding. It will be understood that any two or more of these entities can be combined into a single physical components, and/or any individual one of these entities can be distributed over a greater number of physical components, as dictated by operational considerations.

Those skilled in the art should also appreciate that the retail outlet 112 (or 712) may in fact be co-located with the head office 130. Alternatively, the retail outlet 112 (or 712) may be a web server accessible over the Internet and from which individual consumers can order media devices such as the media device 110 (or 110A or 710). In such a case, the media device 110 (or 110A or 710) may be shipped from a warehouse upon command based on an order placed with the web server, while the web server activates individual media devices by communicating with the activation server 122.

Those skilled in the art will appreciate that in some embodiments, the network entities 118, 122, 126 (as well as 718, 722 and 726) may be implemented using one or more computing apparatuses that have access to a code memory (not shown) which stores computer-readable program code (instructions) for operation of the one or more computing apparatuses. The computer-readable program code could be stored on a medium which is fixed, tangible and readable directly by the one or more computing apparatuses, (e.g., removable diskette, CD-ROM, ROM, fixed disk, USB drive), or the computer-readable program code could be stored remotely but transmittable to the one or more computing apparatuses via a modem or other interface device (e.g., a communications adapter) connected to a network (including, without limitation, the Internet) over a transmission medium, which may be either a non-wireless medium (e.g., optical or analog communications lines) or a wireless medium (e.g., microwave, infrared or other transmission schemes) or a combination thereof. In other embodiments, the network entities 118, 122, 126 (as well as 718, 722 and 726) may be implemented using preprogrammed hardware or firmware elements (e.g., application specific integrated circuits (ASICs), electrically erasable programmable read-only memories (EEPROMs), flash memory, etc.), or other related components.

Also, it should be appreciated that the databases 120, 128 (as well as 720, 728) could be distributed among any number of physical components deemed necessary or desirable to achieve operational specifications.

While specific embodiments of the present invention have been described and illustrated, it will be apparent to those skilled in the art that numerous modifications and variations can be made without departing from the scope of the invention as defined in the appended claims.

## Claims

1. A system comprising:
- a memory;
- at least one network entity operatively coupled to the memory and configured for:
- receiving an identifier of a media device;
- receiving an identity of a retail channel used to acquire the media device;
- storing in the memory an association between the identity of the retail channel and the identifier of the media device;
- causing content specific to the retail channel to be transmitted to the media device over a communications network in response to determining a presence of the media device on the communications network.

2. The system defined in claim 1, wherein the memory comprises a first database and a second database, wherein the association is stored in the first database, the at least one network entity being further configured to (i) receive the identifier of the media device over the communications network, (ii) receive an indication of a geographic region in which the media device is located, (iii) consult the first database based on the identifier of the media device to determine an identity of the retail channel, and (iv) consult the second database based on the identity of the retail channel and the geographic region to determine said content.

3. The system defined in claim 1, the at least one network entity being further configured for receiving an indication of a geographic region of a retail outlet associated with the retail channel and from which the media device was acquired, wherein said storing in the memory an association between the identity of the retail channel and the identifier of the media device comprises storing in the memory an association between the identity of the retail channel, the geographic region of the retail outlet and the identifier of the media device.

4. The system defined in claim 3, wherein the memory comprises a first database and a second database, wherein the association is stored in the first database, the at least one network entity being further configured to (i) receive the identifier of the media device over the communications network, (ii) consult the first database based on the identifier of the media device to determine an identity of the retail channel and the geographic region, and (iv) consult the second database based on the identity of the retail channel and the geographic region to determine said content.

5. A computer-readable storage medium storing instructions which, when executed by at least one computing device, cause the at least one computing device to:
- be attentive to receipt of an identifier of a media device;
- be attentive to receipt of an identity of a retail channel used to acquire the media device;
- responsive to receipt of the identifier of the media device and the identity of the retail channel, store in the memory an association between the identity of the retail channel and the identifier of the media device;
- response to determining a presence of the media device on a communications network, cause content specific to the retail channel to be transmitted to the media device over the communications network.

6. A system comprising:
- a memory;
- a network entity operatively coupled to the memory and configured for:
- receiving an identifier of a media device;
- accessing the memory based on the identifier in order to retrieve content specific to a retail channel used to acquire the media device;
- releasing the content specific to the retail channel towards the media device.

7. The system defined in claim 6, the network entity being a first network entity, the system further comprising a second network entity configured to receive a message from an entity associated with the retail channel, the message signaling acquisition of the media device from the entity, the message comprising an identifier of the retail channel and the identifier of the media device.

8. The system defined in claim 7, wherein the second network entity is further configured to send an alert to the first network entity to signal acquisition of the media device from the entity associated with the retail channel, and wherein the first network entity is further configured to carry out the releasing as a response to receipt of the alert from the second network entity.

9. The system defined in claim 8, wherein the content specific to the retail channel is released in a format compatible with a retail-channel-specific application which, when installed on the media device, is capable of conveying the content specific to the retail channel to a user of the media device.

10. A method comprising:
- receiving an identifier of a media device;
- accessing a memory based on the identifier in order to retrieve content specific to a retail channel used to acquire the media device;
- releasing the content specific to the retail channel towards the media device.

11. A computer-readable storage medium storing instructions which, when executed by at least one computing device, cause the at least one computing device to:
- be attentive to receipt of an identifier of a media device;
- responsive to receipt of the identifier of the media device, access a memory based on the identifier in order to retrieve content specific to a retail channel used to acquire the media device;
- release the content specific to the retail channel towards the media device.

12. A media device, comprising:
- a network communication interface;
- a user interface;
- a processing entity configured for:
- identifying the media device to an external entity via the network communication interface;
- receiving retail-channel-specific content over the network communication interface; and
- conveying the retail-channel-specific content via the user interface through a retail-channel-specific application installed on the media device.

13. A method carried out by a media device acquired via a retail channel, comprising:
- establishing a presence on a communications network;
- receiving content specific to the retail channel over the communications network;
- conveying the content specific to the retail channel to a user of the media device through a retail-channel-specific application specific to the retail channel and installed on the media device.

14. The method defined in claim 13, the retail-channel-specific application being a particular retail-channel-specific application, further comprising:
- receiving a message identifying the particular retail-channel-specific application from among a set of pre-installed retail-channel-specific applications associated with corresponding retail channels;
- activating the particular retail-channel-specific application on the media device.

15. The method defined in claim 13, further comprising:
- receiving instructions for installation of the retail-channel-specific application on the media device over the communications network;
- installing the retail-channel-specific application on the media device.
